# EUROPÄISCHE PATENTANMELDUNG

(11) **EP 1 405 944 A2**
(43) Veröffentlichungstag der Anmeldung: **07.04.2004**
(21) Anmeldenummer: 03450219.5
(22) Anmeldetag: 30.09.2003
(51) Int. Cl.: D05B 11/00, D05B 25/00, D05B 75/00, B26F 1/38

(54) **Verfahren zum Ausschneiden eines Zuschnittes aus einer textilen Warenbahn zum Herstellen von Werkstücken aus einem Faser-Kunststoffverbund**

(30) Priorität: 01.10.2002 AT 6492002
(71) Anmelder: GFM Beteiligungs- und Management GmbH & Co KG, 4403 Steyr (AT)
(72) Erfinder: Dietachmayr, Harald, 4522 Sierning (AT)
(74) Vertreter: Hübscher, Heiner, Dipl.-Ing.

(57) **Zusammenfassung**

Es wird ein Verfahren zum Ausschneiden eines Zuschnittes (13) aus einer textilen Warenbahn (1) zum Herstellen von Werkstücken aus einem Faser-Kunststoffverbund beschrieben, wobei die aus Fasersträngen (2, 3) aufgebaute Warenbahn (1) zunächst entsprechend dem Randverlauf (14) des auszuschneidenden Zuschnittes (13) abgenäht wird, bevor der Zuschnitt (13) aus der Warenbahn (1) ausgeschnitten wird. Um vorteilhafte Verfahrensbedingungen zu schaffen, wird vorgeschlagen, daß die in einer vorgegebenen Förderrichtung (10) schrittweise förderbare Warenbahn (1) in Längsabschnitten (6) bezüglich der Förderrichtung (10) abschnittsweise einerseits ausschließlich innerhalb des Zuschnittbereiches abgenäht sowie anderseits geschnitten und nach jedem abschnittsweisen Näh- und Schneidvorgang um einen Förderschritt entsprechend der Abschnittslänge weitergefördert wird.

## Beschreibung

Die Erfindung bezieht sich auf ein Verfahren zum Ausschneiden eines Zuschnittes aus einer textilen Warenbahn zum Herstellen von Werkstücken aus einem Faser-Kunststoffverbund, wobei die aus Fasersträngen aufgebaute Warenbahn zunächst entsprechend dem Randverlauf des auszuschneidenden Zuschnittes abgenäht wird, bevor der Zuschnitt aus der Warenbahn ausgeschnitten wird.

Werkstücke aus einem Faser-Kunststoffverbund werden lagenweise aus der Werkstückgeometrie entsprechenden Zuschnitten aufgebaut, die aus textilen Warenbahnen der jeweils einzusetzenden Fasern ausgeschnitten werden. Diese Warenbahnen sind aus Fasersträngen beispielsweise in Form von Geweben aufgebaut. Aufgrund der Gewebestruktur neigen die Zuschnitte im Randbereich zum Ausfransen. Die aus dem Randbereich der Zuschnitte bei deren Handhabung verlorenen Fasern bzw. Faserstränge führen zu einer Verminderung der Festigkeit der aus solchen Zuschnitten aufgebauten Werkstücke im Kantenbereich, so daß die Zuschnitte mit Übermaß aus der jeweiligen Warenbahn ausgeschnitten werden, was ein aufwendiges Nachbearbeiten der Werkstückkanten nach der Harzimprägnierung der Zuschnitte erfordert. Um diese Nachteile zu vermeiden und ein genaues Ausschneiden der Zuschnitte mit Endmaß zu ermöglichen, wurde bereits vorgeschlagen (DE 199 52 443 A1), die Warenbahn zunächst entsprechend dem Randverlauf des auszuschneidenden Zuschnittes mit einer Mehrfachnaht abzunähen, um den Zuschnitt anschließend zwischen zwei Nähten maßgenau ausschneiden zu können. Durch das Setzen von Mehrfachnähten werden die Fasern der Faserstränge beidseitig des Schnittbereiches als Voraussetzung für ein konturgenaues Ausschneiden der Zuschnitte festgehalten. Gleichzeitig wird das Ausfransen der Randbereiche des Zuschnittes verhindert. Nachteilig ist allerdings, daß das Setzen von Mehrfachnähten einen zusätzlichen Aufwand bedeutet, und zwar nicht nur durch das Vorsehen eines Nähkopfes mit wenigstens zwei Nadeln, sondern auch durch die damit verbundene Notwendigkeit, den Nähkopf zusätzlich gegenüber dem Randverlauf des Zuschnittes ausrichten zu müssen, damit die Nadeln beidseits des Randverlaufes des Zuschnittes in die Warenbahn einstechen. Dazu kommt, daß bei großflächigeren Zuschnitten vergleichsweise große Tische zur Führung der Warenbahn erforderlich sind.

Zum Steppen und Schneiden von Polsterteilen ist es außerdem bekannt (DE 3801820 A1), die zur Herstellung der Polsterteile eingesetzte Vliesbahn entlang des Umrisses der jeweiligen Zuschnitte abzunähen und innerhalb des abgenähten Bereiches zu steppen, bevor die Polsterteile ausgeschnitten werden, indem die dem Umriß der jeweiligen Zuschnitte folgende Naht zur Führung der Schneideinrichtung abgetastet wird. Da im Gegensatz zu Warenbahnen, die aus Fasersträngen aufgebaut sind, bei Faservliesen zur Herstellung von Polsterteilen der Faserverbund kein Ausfransen der geschnittenen Warenbahn befürchten läßt, treten bei der Herstellung solcher Polsterteile nicht vergleichbare Schneidbedingungen auf. Außerdem bleibt das Problem hinsichtlich des an die maximale Zuschnittsgröße anzupassende Tischgröße ungelöst.

Der Erfindung liegt somit die Aufgabe zugrunde, ein Verfahren zum Ausschneiden eines Zuschnittes aus einer textilen Warenbahn der eingangs geschilderten Art so auszugestalten, daß nicht nur der Nähaufwand verringert werden kann, ohne eine Beeinträchtigung bezüglich der Ausschnittsgenauigkeit der Zuschnitte oder hinsichtlich des Ausfransverhaltens in Kauf nehmen zu müssen, sondern auch eine weitgehende Unabhängigkeit der Tischgröße von der Zuschnittsgröße erreicht wird.

Die Erfindung löst die gestellte Aufgabe dadurch, daß die in einer vorgegebenen Förderrichtung schrittweise förderbare Warenbahn in Längsabschnitten bezüglich der Förderrichtung abschnittsweise einerseits ausschließlich innerhalb des Zuschnittbereiches abgenäht sowie anderseits geschnitten und nach jedem abschnittsweisen Näh- und Schneidvorgang um einen Förderschritt entsprechend der Abschnittslänge weitergefördert wird.

Wird die in einer vorgegebenen Förderrichtung schrittweise förderbare Warenbahn in Längsabschnitten bezüglich der Förderrichtung, so ergibt sich der Vorteil, daß die Länge des Zuschnittes in Förderrichtung der Warenbahn unabhängig von der auf einen Längsabschnitt beschränkten Einrichtung zum Nähen bzw. Schneiden der Warenbahn gewählt werden kann. Nach der abschnittsweisen Bearbeitung muß die Warenbahn um einen der Abschnittslänge entsprechenden Förderschritt weitergefördert werden, um die Bearbeitung in einem weiteren Arbeitsschritt fortsetzen zu können.

Es hat sich außerdem herausgestellt, daß es für ein maßgenaues Ausschneiden eines Zuschnittes aus einer Warenbahn, die aus Fasersträngen aufgebaut ist, keiner Mehrfachnaht bedarf, so daß die Warenbahn lediglich innerhalb des Zuschnittbereiches entsprechend dem Randverlauf des auszuschneidenden Zuschnitts abgenäht werden muß, um ein Ausfransen der Schnittkanten des Zuschnitts zu verhindern. Es ist allerdings dafür zu sorgen, daß die Warenbahn während des Schnittes durch einen Niederhalter niedergespannt wird, vorzugsweise durch wenigstens eine Druckrolle, die eine quer zur Schnittrichtung verlaufende, gegenüber der Werkstückauflage geneigte Achse aufweist, um über die Druckrolle die Warenbahn möglichst nahe dem Schneidwerkzeug niederhalten zu können. Durch die Kombination der abschnittsweisen Bearbeitung der Warenbahn mit der Beschränkung des Abnähens innerhalb des Zuschnittbereiches werden somit besonders vorteilhafte Verfahrensbedingungen geschaffen.

Damit bei einer abschnittsweisen Bearbeitung der Warenbahn Unterschiede hinsichtlich des Näh- und des Schneidvorschubs berücksichtigt werden können, empfiehlt es sich, die Warenbahn in unterschiedlichen Längsabschnitten abzunähen und zu schneiden. Außerdem ist es zur Anpassung der höheren Schnittgeschwindigkeit an die niedrigere Nähgeschwindigkeit vorteilhaft, wenn die Warenbahn mit Hilfe wenigstens zweier Nähköpfe und zur voneinander unabhängigen Steuerung dieser Nähköpfe zusätzlich in unterschiedlichen, je einem Nähkopf zugehörigen Längsabschnitten abgenäht wird, damit die volle Schnittgeschwindigkeit in einem weiteren Längsabschnitt für das Ausschneiden der zumindest bereichsweise abgenähten Zuschnitte ausgenützt werden kann.

Da die Mehrfachnaht nicht mehr zum schnittgerechten Festlegen der Fasern der Faserstränge erforderlich ist, kommt der Einzelnaht vor allem die Aufgabe zu, das Ausfransen des Zuschnittes im Randbereich zu verhindern. Die Neigung zum Ausfransen einer Schnittkante hängt neben der Struktur der Warenbahn insbesondere vom Verlauf der Schnittkante gegenüber dem Verlauf der Faserstränge, also bei einem Gewebe gegenüber dem Verlauf von Schuß und Kette, ab. Je kleiner der Winkel zwischen dem Randverlauf des Zuschnittes und dem Verlauf der Faserstränge ist, desto größer wird die Ausfransneigung. Dieser Umstand kann in vorteilhafter Weise dazu ausgenützt werden, den Nähaufwand zu minimieren, wenn die Warenbahn lediglich in solchen Abschnitten des Randverlaufes des auszuschneidenden Zuschnittes abgenäht wird, in denen der Randverlauf ein Eck bildet oder einen kleineren Winkel als 30° mit randseitigen Fasersträngen einschließt.

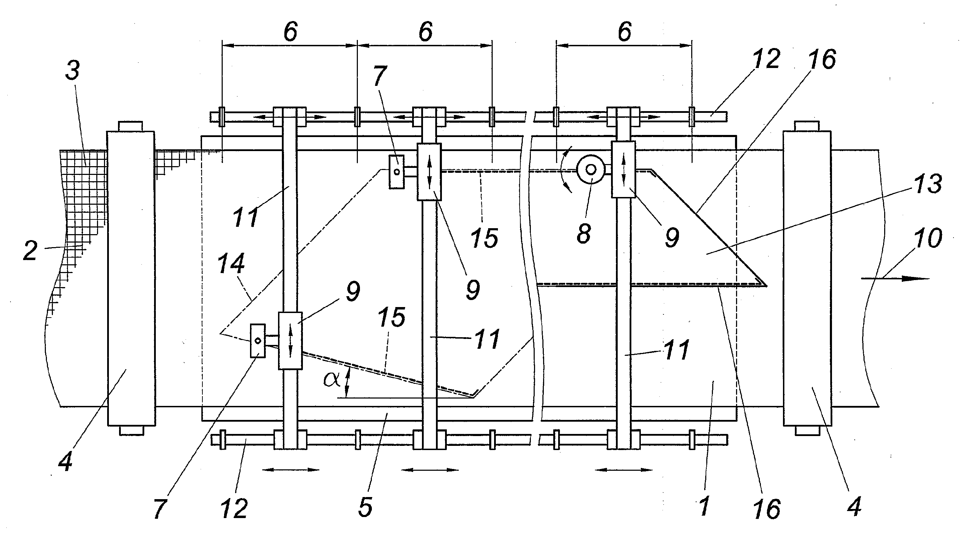

Anhand der Zeichnung wird das erfindungsgemäße Verfahren näher erläutert, und zwar wird eine Vorrichtung zum Abnähen und Ausschneiden eines Zuschnittes aus einer Warenbahn in einer schematischen Draufsicht gezeigt.

Die Warenbahn 1, deren Faserstränge 2 und 3 nach der Art von Schußund Kettfäden eines Gewebes verlaufen und beispielsweise aus Kohlenstoffasern bestehen, wird mit Hilfe von Förderwalzen 4 einer Fördereinrichtung über einen Arbeitstisch 5 gezogen, dem in aufeinanderfolgenden Längsabschnitten 6 einerseits Nähköpfe 7 und anderseits eine Schneideinrichtung 8 zugeordnet sind. Sowohl die Nähköpfe 7 als auch die Schneideinrichtung 8 sind auf Schlitten 9 quer zur Vorschubrichtung 10 der Warenbahn 1 verschiebbar gelagert, wobei die Schlittenführungen 11 selbst in Vorschubrichtung 10 auf Führungsschienen 12 verfahren werden können, so daß die Nähköpfe 7 und die Schneideinrichtung 8 im Bereich der einzelnen Längsabschnitte 6 jeweils beliebig über die Fläche der Warenbahn bewegt werden können. Zur Steuerung dieser Näh- bzw. Schneidbewegungen sind herkömmliche Steuereinrichtungen vorgesehen, über die die Antriebe für die Schlitten 9 bzw. die Schlittenführungen 11 entsprechend dem jeweiligen Randverlauf eines aus der Warenbahn 1 auszuschneidenden Zuschnittes 13 angesteuert werden. Der auszuschneidende Zuschnitt 13 wird durch eine Einzelnaht entlang seines Randes abgenäht, und zwar auf der Seite des Zuschnittes 13, also innerhalb des Zuschnittbereiches. Um die Form des späteren Zuschnittes 13 zu veranschaulichen wurde der Randverlauf 14 im noch nicht geschnittenen Bereich strichpunktiert angedeutet.

Da der Nähvorschub kleiner als die Schnittgeschwindigkeit ist, werden zwei Nähköpfe 7, aber nur eine Schneideinrichtung 8 eingesetzt, so daß trotz der Unterschiede hinsichtlich der Bearbeitungsgeschwindigkeiten die volle Schnittgeschwindigkeit ausgenützt werden kann. Die beiden Nähköpfe 7, die wie die Schneideinrichtung 8 jeweils in den eigenen Längsabschnitten 6 voneinander unabhängig bewegt werden können, nähen die jeweiligen Randnähte 15 in ihrem Längsabschnitt 6 bei stillstehender Warenbahn 1, da die nach dem Setzen der Randnähte 15 im zugehörigen Abschnitt 6 um einen der Abschnittslänge entsprechenden Förderschritt weitergefördert wird, um einerseits die Randnaht 15 entlang des Randverlaufes 14 fortzusetzen und anderseits die abgenähten Bereiche mit Hilfe der Schneidenrichtung 8 ausschneiden zu können. Die sich durch das Ausschneiden ergebenden Schnittkanten sind mit 16 bezeichnet. Diese Schnittkanten 16 werden gemäß der schrittweisen Förderung der Warenbahn 1 ebenfalls abschnittsweise geschnitten. Zu diesem Zweck wird die Schneideinrichtung 8 entlang des Randverlaufes 14 verfahren, wobei über nicht dargestellte, seitlich neben dem Messer angeordnete Druckrollen die Warenbahn 1 zumindest außerhalb des Randverlaufes 14 schnittgerecht an den Arbeitstisch 5 angedrückt wird, um ein maßgenaues Schneiden der Warenbahn 1 ohne Verzug zu gewährleisten.

Da die Neigung zum Ausfransen der Schnittkanten 16 nicht nur von der Struktur der Warenbahn 1, sondern auch vom Randverlauf 14 gegenüber dem Verlauf der Faserstränge 2, 3 abhängt, braucht der Zuschnitt 13 nicht entlang seines gesamten Umfanges abgenäht zu werden. Die Randnähte 15 werden nur dort gesetzt, wo aufgrund eines entsprechend kleinen Winkels α zwischen dem Randverlauf 14 und der Richtung der Faserstränge 2, 3 die Gefahr eines Ausfransens bei der nachfolgenden Handhabung des Zuschnittes 13 besteht. Dieser Winkel α ist von der Warenstruktur abhängig und kann im allgemeinen mit 30° begrenzt werden, so daß beispielsweise ein Randverlauf unter einem Winkel von 45° zu den Fasersträngen 2, 3 keiner Randnaht 15 bedarf, wie dies in der Zeichnung angedeutet ist. Allerdings müssen die Eckbereiche mit Nähten versehen werden, weil in den Eckbereichen auch bei größeren Winkeln α mit einer Ausfransgefahr zu rechnen ist.

## Patentansprüche

1. Verfahren zum Ausschneiden eines Zuschnittes (13) aus einer textilen Warenbahn (1) zum Herstellen von Werkstücken aus einem Faser-Kunststoffverbund, wobei die aus Fasersträngen (2, 3) aufgebaute Warenbahn (1) zunächst entsprechend dem Randverlauf (14) des auszuschneidenden Zuschnittes (13) abgenäht wird, bevor der Zuschnitt (13) aus der Warenbahn (1) ausgeschnitten wird, **dadurch gekennzeichnet, daß** die in einer vorgegebenen Förderrichtung (10) schrittweise förderbare Warenbahn (1) in Längsabschnitten (6) bezüglich der Förderrichtung (10) abschnittsweise einerseits ausschließlich innerhalb des Zuschnittbereiches abgenäht sowie anderseits geschnitten und nach jedem abschnittsweisen Näh- und Schneidvorgang um einen Förderschritt entsprechend der Abschnittslänge weitergefördert wird.

2. Verfahren nach Anspruch 1, **dadurch gekennzeichnet, daß** die Warenbahn (1) in unterschiedlichen Längsabschnitten (6) abgenäht und geschnitten wird.

3. Verfahren nach den Ansprüchen 1 und 2, **dadurch gekennzeichnet, daß** die Warenbahn (1) in zumindest zwei unterschiedlichen Längsabschnitten (6) abgenäht wird.

4. Verfahren nach einen der Ansprüche 1 bis 3, **dadurch gekennzeichnet, daß** die Warenbahn (1) in Abschnitten des Randverlaufes (14) des auszuschneidenden Zuschnittes (13) abgenäht wird, in denen der Randverlauf (14) ein Eck bildet oder einen kleineren Winkel als 30° mit randseitigen Fasersträngen (2, 3) einschließt.
